# EUROPÄISCHE PATENTSCHRIFT

(11) **EP 3 921 686 B1**
(45) Veröffentlichungstag und Bekanntmachung des Hinweises auf die Patenterteilung: **19.08.2026**
(21) Anmeldenummer: 20702599.0
(22) Anmeldetag: 27.01.2020
(51) Int. Cl.: G02B 21/00, G02B 21/36, G03B 7/00, H04N 23/61, H04N 23/72

(54) **VERFAHREN ZUR BILDERZEUGUNG MITTELS EINES MIKROSKOPS UND ENTSPRECHENDES MIKROSKOP**
METHOD FOR GENERATING AN IMAGE BY MEANS OF A MICROSCOPE AND CORRESPONDING MICROSCOPE
PROCÉDÉ D'OBTENTION D'IMAGES AU MOYEN D'UN MICROSCOPE ET MICROSCOPE CORRESPONDANT

(30) Priorität: 06.02.2019 DE 102019102959
(43) Veröffentlichungstag der Anmeldung: 15.12.2021
(73) Patentinhaber: Leica Microsystems CMS GmbH, 35578 Wetzlar (DE)
(72) Erfinder: PELZER, Patric, 35576 Wetzlar (DE)
(74) Vertreter: Schaumburg und Partner Patentanwälte mbB
(86) Internationale Anmeldenummer: PCT/EP2020/051886
(87) Internationale Veröffentlichungsnummer: WO 2020/160949

(56) Entgegenhaltungen:
- EP-A1- 2 207 055
- EP-A1- 2 873 998
- US-A1- 2003 016 301
- US-A1- 2006 210 262
- US-A1- 2012 069 171

## Beschreibung

Die vorliegende Erfindung betrifft ein Verfahren zur Bilderzeugung mittels eines Mikroskops, wobei eine abzubildende Probe sich zur Bildgebung mit vorgegebenen Bilderzeugungsparametern im Objektraum des Mikroskops befindet, sowie ein entsprechendes Mikroskop.

### Stand der Technik

Aus der Druckschrift EP 2 207 055 A1 ist ein Verfahren nach dem Oberbegriff des Anspruchs 1 bekannt. Bei diesem Verfahren wird im Rahmen einer Belichtungsautomatik eine geeignete Belichtungszeit eines CCDs berechnet. Um die benötigte Zeit in der Phase, in der die Belichtungszeit in mehreren Schritten sukzessive berechnet wird, zu verkürzen, wird der Verstärkungsfaktor des CCDs vergrößert. Nachdem eine geeignete Belichtungszeit gefunden ist, wird der Verstärkungsfaktor wieder zurückgesetzt, und es erfolgt die eigentliche Bildaufnahme.

In der Druckschrift US 2003/016301 A1 ist eine automatische Belichtungssteuerung offenbart, bei der eine Bewegung eines Mikroskoptisches erfasst wird. Mit dem Erfassen der Tischbewegung werden die Belichtungszeit und die Verstärkung eines Bildaufnahmeelementes auf zuvor eingestellten Werten festgehalten.

In der Druckschrift EP 2 873 998 A1 wird die Geschwindigkeit eines bewegten Mikroskoptisches erfasst und in Abhängigkeit der Tischgeschwindigkeit zwischen einem HDR-Modus und einem normalen Bilderzeugungsmodus umgeschaltet.

Auch die Druckschrift US 2012/069171 A1 offenbart ein Verfahren, bei dem die Geschwindigkeit eines Mikroskoptisches erfasst wird. Übersteigt die erfasste Geschwindigkeit einen Schwellwert, so wird die Bildfrequenz erhöht.

Bei bekannten Bildgebungs- bzw. Bilderzeugungsverfahren mittels Mikroskopen befindet sich die abzubildende Probe oder genauer gesagt ein beliebig gewählter Bezugspunkt auf dieser Probe an einer Position im Objektraum des Mikroskops. Die Bildgebung bzw. Bilderzeugung erfolgt mit Bilderzeugungsparametern, die in der Regel abhängig von der Probe, der Beleuchtungsart, den genutzten Mikroskopkomponenten und allgemein des gewählten Mikroskopierverfahrens eingestellt werden. Üblicherweise befindet sich die abzubildende Probe auf einem Mikroskoptisch, der zum Positionieren der Probe in mindestens der Ebene verfahren werden kann, die senkrecht zu der durch das Mikroskopobjektiv definierten optischen Achse steht. Üblicherweise wird die Mikroskoptischebene als x-y-Ebene bezeichnet, sodass die optische Achse in z-Richtung verläuft. Zur Fokussierung ist das Mikroskopobjektiv und/oder der Mikroskoptisch meist in z-Richtung verschiebbar. Es existieren auch sogenannte Fixed Stage Mikroskope, bei denen sich der Mikroskopaufbau relativ zum unbeweglichen Mikroskoptisch bewegt, der lediglich in der Höhe verstellbar sein kann. Im Rahmen dieser Anmeldung soll der Begriff einer "x-y-Bewegung des Mikroskoptisches" immer eine Relativbewegung des Mikroskoptisches bzw. der darauf befindlichen Probe relativ zur optischen Achse des Mikroskopobjektivs bezeichnen, sodass ausdrücklich Fixed Stage Mikroskope umfasst sein sollen.

Bei den oben genannten, prinzipiell aus dem Stand der Technik bekannten Mikroskopen kommt es bei einem Verfahren des Mikroskoptisches oder des Mikroskopobjektivs in x- und/oder y- und/oder z-Richtung während der Bilderzeugung zu Bewegungsartefakten im erzeugten Bild. Die im Rahmen dieser Anmeldung betrachteten Mikroskope lassen sich grob in Weitfeld-Mikroskope und Konfokal-Mikroskope einteilen. In der Weitfeld-Mikroskopie zieht das erzeugte Bild bei einem solchen Verfahren Schlieren. Bei einem Verfahren in z-Richtung sind diese Schlieren weniger störend, es muss jedoch mindestens eine volle Belichtungszeit abgewartet werden, um die Schärfe korrekt einschätzen zu können. Erst wenn innerhalb einer Belichtungszeit keine Bewegung stattgefunden hat, sind keine Bewegungsartefakte mehr im Bild. Endet die Bewegung innerhalb eines Belichtungsintervalls, muss nach dessen Ende nochmals eine volle Belichtungszeit (ohne Bewegung) abgewartet werden.

Bei der Konfokal-Mikroskopie wird die Probe über einen x-y-Scanner punktförmig beleuchtet und das erzeugte Bild zeilenweise aufgebaut. Bei einer Bewegung der Probe im Objektraum entsteht somit ein Versatz zwischen den bereits aufgenommenen Zeilen, den Zeilen während der Bewegung und den Zeilen nach der Bewegung. Je länger ein Frame bzw. der im Field of View liegende Probenausschnitt gescannt wird, desto länger dauert es auch, bis alle Bildzeilen sich aktualisiert haben und die Probe an der neuen Position wiedergegeben wird. Auch in der Konfokal-Mikroskopie muss wie in der Weitfeld-Mikroskopie die richtige Abbildungsebene (Imagingebene) durch Verfahren in z-Richtung gefunden werden. Die dabei entstehenden Artefakte verhalten sich ähnlich einer Bewegung in x-y-Richtung. Es braucht eine volle Framerate (Bildwiederholungsrate), bis alle Pixel des erzeugten Bildes die aktuelle Fokusebene darstellen.

Es besteht somit Bedarf, das Problem entstehender Bewegungsartefakte bei einer Verschiebung oder Bewegung der abzubildenden Probe im Objektraum eines Mikroskops zu beseitigen bzw. zu mindern.

### Offenbarung der Erfindung

Zur Lösung wird ein Verfahren zur Bilderzeugung mittels eines Mikroskops sowie ein entsprechendes Mikroskop gemäß den unabhängigen Patentansprüchen vorgeschlagen. Vorteilhafte Ausgestaltungen ergeben sich aus den jeweiligen Unteransprüchen sowie der nachfolgenden Beschreibung.

Bei einem erfindungsgemäßen Verfahren zur Bilderzeugung mittels eines Mikroskops, bei dem zur Bilderzeugung mit vorgegebenen Bilderzeugungsparametern eine abzubildende Probe sich im Objektraum des Mikroskops befindet, wird zunächst eine Bewegung oder eine beabsichtigte Bewegung der Probe detektiert. Daraufhin wird abhängig von einer gemessenen oder prognostizierten Bewegungsgröße automatisch mindestens ein Bilderzeugungsparameter während der Bewegung der Probe verändert.

Wie bereits eingangs angemerkt, befindet sich die abzubildende Probe oder genauer gesagt ein beliebig gewählter Bezugspunkt auf dieser Probe üblicherweise an einer bestimmten Position im Objektraum des Mikroskops, um eine Abbildung der Probe bzw. eines Probenausschnitts zu ermöglichen. Sollte die Probe, wie ebenfalls auch bereits oben ausgeführt, in eine Raumrichtung (x-, y- und/oder z-Richtung) während der Bilderzeugung bewegt werden, kommt es zu unerwünschten Bewegungsartefakten. Allgemein kann eine Bewegung der Probe verschiedene Gründe haben. Neben der bereits geschilderten Probenverschiebung ist beispielsweise eine Bewegung der Probe (lebende Zellen und dergleichen) selbst möglich, obwohl bspw. der Mikroskoptisch nicht verstellt wird, oder eine zufällige, unbeabsichtigte Bewegung findet bspw. durch Stoß an das Mikroskop oder den Mikroskoptisch statt.

Um die daraus resultierenden Bewegungsartefakte zu vermeiden, wird erfindungsgemäß zunächst eine Bewegung der Probe, beispielsweise verursacht durch Bewegung des Mikroskoptisches in x- und/oder y-Richtung oder durch Aktivierung des Z-Triebs zur Fokussierung, detektiert. Erfindungsgemäß kann auch eine beabsichtigte Bewegung der Probe, in anderen Worten eine bevorstehende Bewegung der Probe detektiert werden. Dies umfasst Fälle, in denen davon auszugehen ist, dass eine Bewegung der Probe bevorsteht, etwa wenn ein Benutzer oder das Mikroskopsystem selbst entsprechende Steuerbefehle zur Bewegung der Probe erlassen hat, zum Beispiel durch Eingabe neuer x-, y- und/oder z-Koordinaten, also einer neuen Position, der Probe bzw. des genannten Bezugspunkts auf dieser Probe. Hieraus kann das System bzw. die Steuereinheit des Mikroskops automatisch entsprechende Bewegungsgrößen prognostizieren, bspw. mit welcher Geschwindigkeit und/oder Beschleunigung die neue Position angefahren werden wird, und sich automatisch auf eine Veränderung von Bilderzeugungsparametern einstellen. Erfindungsgemäß wird automatisch mindestens ein Bilderzeugungsparameter während der Bewegung der Probe verändert. Hierbei ist vorgesehen als Bilderzeugungsparameter die Belichtungszeit zu erniedrigen. Zudem kann es insbesondere vorteilhaft sein, als Bilderzeugungsparameter die Bildfrequenz zu erhöhen. Dadurch dass derartige geeignete Bilderzeugungsparameter während der Bewegung der Probe verändert werden, können störende Bewegungsartefakte im Bild reduziert oder ganz vermieden werden. Eine schnellere Bildfolge bzw. Bildfrequenz (frame rate) führt zu einem schnelleren Erneuern (refresh) des erzeugten Bildes, eine kürzere Belichtungszeit (allg. Latenzzeit) erhöht die zeitliche Auflösung und führt somit zu einer an die Bewegung angepassten Bildgebung.

Erfindungsgemäß wird der mindestens eine Bilderzeugungsparameter abhängig von einer Bewegungsgröße während der Bewegung der Probe verändert. Bei dieser "Bewegungsgröße" kann es sich um einen der folgenden Parameter oder um einer Kombination solcher Parameter handeln: eine Bewegungsgeschwindigkeit (absolute oder relative Veränderung einer Distanz oder Strecke pro Zeit), eine Bewegungsbeschleunigung (Veränderung einer Bewegungsgeschwindigkeit pro Zeit), eine Änderung der aktuellen Koordinaten eines Bezugspunktes auf der Probe und/oder auf dem Mikroskoptisch und/oder auf dem Mikroskopobjektiv. Bei einer bevorstehenden, d.h. beabsichtigen Bewegung der Probe wird eine solche Bewegungsgröße ermittelt, indem anhand der bekannten Geräteparameter, wie die Steuerkurven für die Bewegung des Mikroskoptisches, und der beabsichtigten Verschiebung der Probe (beispielsweise nach Eingabe der neuen Probenposition) die entsprechende Bewegungsgröße (typische Bewegungsgeschwindigkeit oder - beschleunigung des Mikroskoptisches beim Anfahren der neuen Position) im Voraus bestimmt oder prognostiziert wird.

Die Ermittlung einer solchen Bewegungsgröße ermöglicht es, den oder die betreffenden Bilderzeugungsparameter abhängig von der ermittelten Bewegungsgröße, beispielsweise direkt proportional zu dieser oder gemäß einer vorgegebenen Funktion in Abhängigkeit von der Bewegungsgröße, zu verändern. Dies erlaubt es weiterhin, den oder die betreffenden Bilderzeugungsparameter erst zu verändern, wenn die Bewegungsgröße der tatsächlichen Bewegung oder der prognostizierten, d.h. beabsichtigten Bewegung einen vorgegebenen Schwellenwert übersteigt. Auf diese Weise können geringfügige oder langsame Bewegungen, die entsprechend nur geringfügig zu Bewegungsartefakten führen, unberücksichtigt bleiben. Hingegen können Bewegungen über größere Distanzen oder schnell ablaufende Bewegungen entsprechend berücksichtigt werden. Dies ist beispielsweise der Fall, wenn die Probe teilweise oder ganz aus dem Sichtfeld eines Mikroskopobjektivs des Mikroskops verfahren wird oder sich selbst daraus bewegt. Eigenbewegungen der Probe sind ausdrücklich umfasst. Diese treten beispielsweise bei Bewegung von Organellen, Bewegung von Einzellern, Bewegung von Organen oder Muskeln, wie Herzschlag, in kleinen Organismen oder Bewegung der Organismen selbst, etwa beim Life Cell Imaging, auf.

Beispielsweise kann eine beabsichtigte, also bevorstehende Bewegung der Probe detektiert werden, wenn eine Benutzereingabe zur Änderung der Koordinaten der Probe erfolgt. Diese Benutzereingabe kann beispielsweise einen oder mehrere Tastendrücke, ein Berühren eines Touchscreens, eine Eingabe mittels Gesten oder eine Spracheingabe umfassen. Es ist auch möglich, ein separates Eingabegerät zu verwenden, das mit dem Mikroskop in Wirkverbindung steht und eine Auswahl für eine Tischbewegung ermöglicht.

Hierbei kann es sich um einen Steuerbefehl zu einer translatorischen Bewegung der Probe innerhalb des Field of View und/oder zu einer Bewegung entlang der optischen Achse (z-Richtung) handeln. Das System bzw. die Steuereinheit des Mikroskops kann in diesem Fall beispielsweise auch prüfen, ob die bevorstehende Bewegung der Probe bzw. die entsprechende Bewegungsgröße den vorgegebenen Schwellenwert übersteigt. Alternativ kann ohne Schwellenwert gearbeitet werden. Dabei wird die Änderung des mindestens einen Bilderzeugungsparameters bei jeder aufgetretenen Veränderung der Bewegungsgröße vorgenommen.

Hierzu kann der mindestens einen Bilderzeugungsparameter jeweils um einen festen Betrag geändert werden oder auf einen vordefinierten Wert gesetzt werden.

Alternativ kann die Veränderung des mindestens einen Bilderzeugungsparameters dynamisch mit der Bewegung der Probe vorgenommen werden. Hierzu kann eine Funktion in der Recheneinheit des Mikroskops hinterlegt werden, die eine kontinuierliche Änderung des mindestens einen Bilderzeugungsparameters in Abhängigkeit von der Veränderung der Bewegungsgröße definiert.

Wiederum alternativ können mehrere Schwellenwerte vorgegeben werden, sodass abhängig von der Bewegungsgröße der Bewegung bzw. der beabsichtigten Bewegung bei Überschreiten der jeweiligen Schwellwerte bestimmte Bilderzeugungsparameter verändert werden und/oder ein bestimmter Bilderzeugungsparameter auf unterschiedliche Weise angepasst an die Bewegungsgröße verändert wird.

Im Rahmen vorliegender Anmeldung sollen Konfokalmikroskope betrachtet werden. Bei einem Konfokalmikroskop ist es zweckmäßig, als Bilderzeugungsparameter eine Scannerfrequenz des Konfokalmikroskops während der Bewegung der Probe zu erhöhen. Alternativ kann die Scanauflösung des Konfokalscanners reduziert werden.

Zusätzlich kann es für Konfokalmikroskope sinnvoll sein, während der Bewegung der Probe eine nachgeschaltete Bildverarbeitung zu vermindern, beispielsweise ein Verrechnen mehrerer Bilder oder eine Nachbearbeitung von Bildern einzuschränken bzw. zu beenden.

Weiterhin ist es vorteilhaft, einen mit einer Veränderung des mindestens einen Bilderzeugungsparameters etwaige einhergehenden Lichtverlust oder allgemeiner eine Reduktion einer zur Bilderzeugung detektierten Lichtmenge bzw. gemessenen Signalstärke auszugleichen. Auf diese Weise kann die Bildqualität hinsichtlich Bildhelligkeit und Kontrast möglichst beibehalten werden. Hierbei ist es vorteilhaft, einen etwaigen Lichtverlust bzw. die genannte Signalstärkenreduktion durch eine Erhöhung der Verstärkung eines zur Bildgebung verwendeten Sensors, wie etwa dem genannten lichtsensitiven Detektor zur Bildgebung bzw. die genannte Kamera, auszugleichen. Zusätzliche oder alternative Maßnahmen sind die Erhöhung der Belichtungsintensität einer zur Beleuchtung der abzubildenden Probe verwendeten Beleuchtungseinheit des Mikroskops, die Vergrößerung eines bei einem Konfokalmikroskop verwendeten Pinholes, die Reduktion der Auflösung im erzeugten Bild (Binning) und/oder die Anpassung des Bildkontrasts bei der Darstellung des einem Benutzer angezeigten Bildes.

In einer weiteren vorteilhaften Ausgestaltung des erfindungsgemäßen Verfahrens wird ein Ende der Bewegung der Probe detektiert. Dies ist beispielsweise bei einem detektierten Befehl zur Bewegung der Probe in einfacher Weise möglich, da mit Erreichen der neuen Position ein Ende der Bewegung stattfindet. Alternativ wird die tatsächliche Bewegung verfolgt (getrackt) und nach einer vorbestimmten Dauer einer Nicht-Bewegung kann von einem Ende der Bewegung ausgegangen werden. Nach Ende der Bewegung werden insbesondere die vor der Bewegung eingestellten Bilderzeugungsparameter wieder eingestellt. Hierzu ist es sinnvoll, die jeweils eingestellten Bilderzeugungsparameter zu speichern. Zumindest sollten die Bilderzeugungsparameter gespeichert werden, bevor eine Änderung aufgrund einer Probenbewegung stattfindet. Alternativ können nach Ende der Bewegung der Probe neue Bilderzeugungsparameter eingestellt werden.

Die Erfindung betrifft weiterhin ein Mikroskop umfassend ein Mikroskopobjektiv und eine dem Mikroskopobjektiv in einem Beobachtungsstrahlengang des Mikroskops nachgeschaltete Bilderzeugungseinrichtung zur Bilderzeugung mit vorgegebenen Bilderzeugungsparametern. Weiterhin umfasst das Mikroskop einen Mikroskoptisch zur Aufnahme einer abzubildenden Probe und eine Positioniereinheit zur Positionierung der Probe (oder genauer gesagt eines beliebig wählbaren Bezugspunkts der Probe) im Objektraum des Mikroskops, wobei die Positioniereinheit mit der Bilderzeugungseinrichtung derart in Kommunikationsverbindung steht, dass nach Erfassen einer Bewegung oder einer beabsichtigten, d.h. bevorstehenden Bewegung der Probe abhängig von einer beliebig wählbaren Bezugspunkts der Probe) im Objektraum des Mikroskops, wobei die Positioniereinheit mit der Bilderzeugungseinrichtung derart in Kommunikationsverbindung steht, dass nach Erfassen einer Bewegung oder einer beabsichtigten, d.h. bevorstehenden Bewegung der Probe abhängig von einer Bewegungsgröße mindestens ein Bilderzeugungsparameter während der Bewegung der Probe verändert wird. Hierzu umfasst das erfindungsgemäße Mikroskop insbesondere eine Steuereinheit, die mit der Positioniereinheit und der Bilderzeugungseinrichtung in Kommunikationsverbindung steht, das heißt mit diesen durch eine Signalleitung oder kabellos verbunden ist, wobei die Steuereinheit derart eingerichtet ist, dass nach Erfassen einer Bewegung oder einer beabsichtigten, d.h. bevorstehenden Bewegung der Probe abhängig von einer Bewegungsgröße mindestens ein Bilderzeugungsparameter während der Bewegung der Probe verändert wird.

Das Erfassen einer tatsächlichen oder bevorstehenden Bewegung der Probe kann beispielsweise über die Positioniereinheit erfolgen, indem bspw. Stellsignale von der Steuereinheit an die Positioniereinheit oder Stellsignale von der Positioniereinheit selbst ausgewertet werden.

Alternativ oder zusätzlich kann beispielsweise ein Signal eines Messstrahls, der an der Probe reflektiert wird, ausgewertet werden, um auf eine Positionsänderung der Probe schließen zu können. Derartige positionssensitive Messstrahlen sind bspw. aus der Autofokussiertechnik bekannt.

Alternativ oder zusätzlich kann das Mikroskop mit einer Bildauswerteeinheit ausgestattet sein, welche durch Bildauswertung die Bewegung der Probe detektiert und eine Bewegungsgröße ermittelt, wobei mindestens ein Bilderzeugungsparameter während der Bewegung der Probe verändert wird, sofern vorher bspw. eine der folgenden Bedingungen erfüllt ist:
- Es wird eine Bewegung detektiert und ein entsprechendes Triggersignal erzeugt;
- Es wird eine Bewegungsgröße ermittelt und mit einem Schwellenwert verglichen, wobei bei Überschreiten des Schwellenwertes ein Triggersignal erzeugt wird;
- Es wird eine Bewegungsgröße ermittelt und ein Triggersignal erzeugt, das proportional zu dem Wert der Bewegungsgröße ist;
- Es wird eine Bewegungsgröße ermittelt und ein Triggersignal erzeugt, das proportional zu dem Wert der Bewegungsgröße ist, wobei bei Überschreiten eines Schwellwertes der Proportionalitätsfaktor des Triggersignals verändert wird;

Das Mikroskopobjektiv dient zusammen mit der Bilderzeugungseinrichtung des Mikroskops zur Erzeugung eines Bilds der Probe oder eines Probenausschnitts. Der Mikroskoptisch des Mikroskops dient zur Aufnahme der abzubildenden Probe und ist in der Regel in einer Ebene verfahrbar, die senkrecht zur durch das Mikroskopobjektiv definierten optischen Achse steht. Der Mikroskoptisch und/oder das Mikroskopobjektiv sind häufig in Richtung der optischen Achse (z-Richtung) verfahrbar, insbesondere um den Fokus einzustellen. Wiederum sei darauf hingewiesen, dass sämtliche Bewegungen als Relativbewegungen der Probe bezüglich der optischen Achse des Mikroskopobjektivs zu interpretieren sind, sodass auch sogenannte Fixed Stage Mikroskope umfasst sein sollen. Die Positioniereinheit des erfindungsgemäßen Mikroskops bewirkt die Positionierung der Probe im Objektraum des Mikroskops, das heißt eines beliebig gewählten Bezugspunkts auf der Probe an bestimmten x-y-z-Koordinaten.

Zur Implementierung des erfindungsgemäßen Verfahrens ist zweckmäßigerweise die genannte Steuereinheit des erfindungsgemäßen Mikroskops vorgesehen, die einerseits mit der Positioniereinheit, andererseits mit der Bilderzeugungseinrichtung in Kommunikationsverbindung steht und derart eingerichtet ist, dass abhängig von einer Bewegungsgröße mindestens ein Bilderzeugungsparameter während einer Bewegung der Probe in x- und/oder y- und/oder z-Richtung verändert wird. Die Steuereinheit kann auch eine Auswerteeinheit darstellen oder umfassen, die eine Bewegung der Probe nach den oben geschilderten Möglichkeiten detektiert und/oder die entsprechende Bewegungsgröße ermittelt. Bezüglich Einzelheiten und Vorteile des erfindungsgemäßen Mikroskops sei ausdrücklich auf die obigen Ausführungen im Zusammenhang mit dem erfindungsgemäßen Verfahren verwiesen.

In vorteilhafter Ausgestaltung weist das Mikroskop eine Beleuchtungseinheit zur Erzeugung eines auf die Probe gerichteten Beleuchtungsstrahlengangs auf, wobei die Beleuchtungsintensität der Beleuchtungseinheit, insbesondere auch über die Steuereinheit, einstellbar ist. Auf diese Weise können etwaige auftretende Lichtverluste bzw. Bildsignalstärkenreduktionen, die mit einer Veränderung eines Bilderzeugungsparameters verbunden sind, ausgeglichen werden, indem die Beleuchtungsintensität erhöht wird.

Es ist vorteilhaft, wenn das erfindungsgemäße Mikroskop eine Speichereinheit zur Speicherung von eingestellten Bilderzeugungsparametern umfasst. Auf diese Weise können nach Detektion eines Endes der Bewegung der Probe die vor der Bewegung der Probe eingestellten Bilderzeugungsparameter wieder eingestellt werden.

Es ist weiterhin vorteilhaft, wenn die Steuereinheit des Mikroskops derart eingerichtet ist, dass eine beabsichtigte Bewegung der Probe detektiert wird, wenn eine Benutzereingabe zur Änderung der Koordinaten der Probe erfolgt. Hierzu sei auf die obigen Ausführungen im Zusammenhang mit dem erfindungsgemäßen Verfahren verwiesen.

Weiterhin ist es vorteilhaft, wenn die Steuereinheit des Mikroskops derart eingerichtet ist, dass der mindestens eine Bilderzeugungsparameter während der Bewegung der Probe erst dann verändert wird, wenn die Bewegungsgröße der Bewegung oder der beabsichtigten Bewegung einen vorgegebenen Schwellenwert übersteigt. Auch hinsichtlich dieser Ausgestaltung soll auf die obigen Ausführungen im Zusammenhang mit dem erfindungsgemäßen Verfahren verwiesen werden.

In einer alternativen Ausführung ist die Steuereinheit des Mikroskops derart eingerichtet, dass der mindestens eine Bilderzeugungsparameter während der Bewegung der Probe proportional zur Bewegungsgröße der Bewegung oder der beabsichtigten Bewegung verändert wird. Auch hinsichtlich dieser Ausgestaltung soll auf die obigen Ausführungen im Zusammenhang mit dem erfindungsgemäßen Verfahren verwiesen werden.

Das erfindungsgemäße Mikroskop ist als Konfokalmikroskop ausgebildet und umfasst eine Scaneinheit zum Scannen eines Beleuchtungsstrahlengangs über die abzubildende Probe, wobei die Scannerfrequenz und/oder die Scanauflösung der Scaneinheit veränderbar ist. Bezüglich der genannten Ausbildungen des erfindungsgemäßen Mikroskops sei auf die obigen Ausführungen und auf die nachfolgenden Ausführungsbeispiele verwiesen.

Schließlich betrifft die Erfindung ein Computerprogramm mit Programmcode, bei dessen Ausführung auf einer Recheneinheit, insbesondere der Steuereinheit des erfindungsgemäßen Mikroskops, ein erfindungsgemäßes Verfahren durchgeführt wird. Weiterhin betrifft die Erfindung ein entsprechendes Computerprogrammprodukt mit einem darauf gespeicherten Computerprogramm mit Programmcode, bei dessen Ausführung auf einer Recheneinheit, insbesondere der Steuereinheit des erfindungsgemäßen Mikroskops, ein erfindungsgemäßes Verfahren durchgeführt wird. Das Computerprogramm kann als solches heruntergeladen oder hochgeladen werden oder auf einem Computerprogrammprodukt gespeichert oder zwischengespeichert oder als Firmware implementiert sein. Als Computerprogrammprodukt kommen flüchtige oder nichtflüchtige Speichermedien, wie beispielsweise ein USB-Stick, RAM- oder ROM-Speicher bekannter Art, in Frage. Die genannte Recheneinheit kann die Steuereinheit des erfindungsgemäßen Mikroskops oder ein Teil dieser Steuereinheit sein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

Figur 1 zeigt schematisch die wesentlichsten Komponenten eines erfindungsgemäßen Mikroskops in einer ersten Ausführungsform,
Figur 2 zeigt schematisch die wesentlichsten Komponenten eines erfindungsgemäßen Mikroskops in einer zweiten Ausführungsform,
Figur 3 zeigt schematisch die wesentlichsten Komponenten eines erfindungsgemäßen Mikroskops in einer dritten Ausführungsform und
Figur 4 zeigt die Abfolge von Verfahrensschritten eines erfindungsgemäßen Verfahrens gemäß möglichen Ausführungsformen.

Die Figuren werden im Folgenden übergreifend behandelt; gleiche Bezugszeichen bezeichnen bau- und/oder funktionsgleiche Elemente. Die Mikroskope gemäß

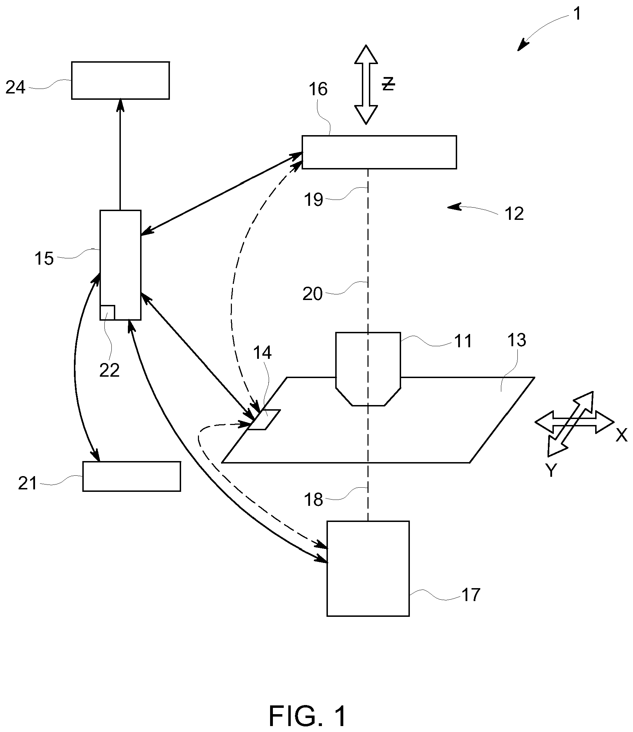

Figuren 1 bis 3 sind lediglich schematisch mit ihren für die vorliegende Erfindung wesentlichen Komponenten dargestellt. Weitere Komponenten der dort behandelten Mikroskope sind an sich aus dem Stand der Technik bekannt.

Figur 1 zeigt als Mikroskop 1 ein Durchlichtmikroskop, das zur Gattung der Weitfeld-Mikroskope gehört. Das Mikroskop 1 umfasst eine Beleuchtungseinheit 17, die unterhalb des Mikroskoptisches 13 angeordnet ist. Das Mikroskopobjektiv ist mit 11 bezeichnet. Es definiert in üblicher Weise eine optische Achse 20. Die Beleuchtungseinheit 17 umfasst üblicherweise eine hier nicht dargestellte Beleuchtungsoptik zur Erzeugung eines Beleuchtungsstrahlengangs 18, der eine auf dem Mikroskoptisch 13 angeordnete Probe durchleuchtet. Die Probe wird von dem Mikroskopobjektiv 11 und einer nachgeschalteten, hier ebenfalls nicht dargestellten Bilderzeugungsoptik, abgebildet, wobei ein lichtsensitiver Detektor 16, beispielsweise eine Kamera, das entsprechende Bild aufnehmen kann, welches auf einer Anzeigeeinheit 24 angezeigt wird. Der Beobachtungsstrahlengang ist mit 19 gekennzeichnet. Die Bilderzeugungseinrichtung 12 umfasst die hier nicht dargestellte Bilderzeugungsoptik sowie den lichtsensitiven Detektor 16. Bei dem Mikroskoptisch 13 handelt es sich um einen x-y-Mikroskoptisch, der in die zwei Raumrichtungen x und y, senkrecht zur optischen Achse 20 und somit senkrecht zu der zur optischen Achse parallel verlaufenden z-Achse verfahren werden kann. Hierzu dient eine Positioniereinheit 14, die die entsprechenden Antriebe des x-y-Tisches ansteuert. Eine Benutzerschnittstelle zur Einstellung von Mikroskopparametern ist mit 21 bezeichnet. Über die Benutzerschnittstelle 21 kann ein Benutzer das gewünschte Mikroskopierverfahren und hierfür auszuwählende Parameter bestimmen. Eine Steuereinheit 15, die mit der Benutzerschnittstelle 21 in Kommunikationsverbindung steht, übernimmt dann in der Regel weitestgehend automatisch die Einstellung sämtlicher Mikroskopparameter für die gewählte mikroskopische Bildgebung.

Wie aus Figur 1 ersichtlich, steht die Steuereinheit 15 mit der Positioniereinheit 14 sowie mit der Bilderzeugungseinrichtung 12, hier mit dem lichtsensitiven Detektor bzw. der Kamera 16 der Bilderzeugungseinrichtung 12, in Kommunikationsverbindung. Das Bild wird auf einer Anzeigeeinheit 24 dargestellt, die mit der Steuereinheit 15 und/oder mit der Kamera 16 verbunden ist. Wird eine auf dem Mikroskoptisch 13 befindliche Probe während der mikroskopischen Bildgebung in eine beliebige Richtung bewegt bzw. bewegt sich selbst in eine beliebige Richtung, so kommt es aus den eingangs genannten Gründen zu Bewegungsartefakten im aufgenommenen Mikroskopbild. Im Folgenden seien ohne Beschränkung der Allgemeinheit nur Probenbewegungen in der x-y-Ebene betrachtet. Das in Figur 1 gezeigte Mikroskop 1 ist auch für Probenbewegungen in z-Richtung ausgerüstet, wenn der dort dargestellte Mikroskoptisch 13 in z-Richtung beweglich ist. Sollte nur das Mikroskopobjektiv 11 in z-Richtung, also parallel zur optischen Achse 20, verschiebbar sein, wäre in diesem Fall die Positioniereinheit 14 entweder mit dem z-Trieb des Objektivs 11 verbunden oder die Steuereinheit 15 wäre mit einem eigens ansteuerbaren z-Trieb des Objektivs 11 in Kommunikationsverbindung.

Bei einer Bewegung der Probe in der x-y-Ebene kann unmittelbar nach Beginn der Bewegung mindestens ein Bilderzeugungsparameter derart verändert werden, dass entstehende Bewegungsartefakte bestmöglich reduziert oder beseitigt werden. Hierzu steht die Steuereinheit 15 in Kommunikationsverbindung mit der Kamera 16, um insbesondere die Belichtungszeiten der Kamera 16 zu verkürzen. Aufgrund ihrer Verbindung zu dem Mikroskoptisch 13 bzw. der Positioniereinheit 14 kann die Steuereinheit 15 ein Ende der Bewegung registrieren. Danach kehrt das System automatisch zu den vor der Bewegung eingestellten Bilderzeugungsparametern zurück oder stellt neue Bilderzeugungsparameter ein. Diese sind vorteilhafterweise in einem Speicher 22 hinterlegt, der in diesem Fall Bestandteil der Steuereinheit 15 ist. Selbstverständlich kann dieser Speicher 22 auch unabhängig von der Steuereinheit 15 realisiert sein. Die Steuereinheit 15 kann auch eine Auswerteeinheit darstellen oder umfassen, die eine Bewegung der Probe nach den oben geschilderten Möglichkeiten detektiert und die entsprechende Bewegungsgröße ermittelt. In einer alternativen Ausführungsform ist die Positioniereinheit 14 direkt mit der Kamera 16 verbunden (gestrichelte Linie). Auf diese Weise kann auf die Steuereinheit 15 ganz oder teilweise verzichtet werden. Die zur Veränderung der Bilderzeugungsparameter notwendigen Funktionen werden dann über die direkte Verbindung von Positioniereinheit 14 und Kamera 16 realisiert.

Weiterhin ist vorteilhaft, wenn während der Bewegung der Probe eine üblicherweise erfolgende Bildverarbeitung von mikroskopischen Bildern reduziert wird, um die Bilderzeugung noch besser an die Dynamik der Probenbewegung anzupassen.

Wie aus Figur 1 weiterhin ersichtlich, ist die Steuereinheit 15 über eine Signalleitung mit der Beleuchtungseinheit 17 verbunden. Selbstverständlich können sämtliche hier dargestellten Signal- bzw. Kommunikationsverbindungen über Leitungen oder kabellos realisiert werden. Die Verbindung mit der Beleuchtungseinheit 17 dient dem Zweck, den bei der Bildgebung mit verkürzter Belichtungszeit erzeugten Lichtverlust zu kompensieren. Hierzu erhöht die Steuereinheit 15 die Beleuchtungsintensität der Beleuchtungseinheit 17 in einer Weise, um die Bildhelligkeit im Wesentlichen konstant zu halten. Diese Funktion kann im Prinzip alternativ wiederum über eine direkte Verbindung zwischen Positioniereinheit 14 und Beleuchtungseinheit 17 realisiert werden (gestrichelte Linie). Auch in diesem Beispiel kann nach Ende der Bewegung der Probe zu der ursprünglichen Beleuchtungsintensität zurückgekehrt werden.

Neben den Fällen, in denen das System selbst eine Bewegung der Probe registriert, sind Fälle denkbar, in denen vom System eine beabsichtigte bzw. bevorstehende Bewegung der Probe erkannt werden kann. Dies ist beispielsweise dann der Fall, wenn ein Benutzer über die Benutzerschnittstelle 21 eine neue Probenposition in x- und/oder y- und/oder z-Richtung eingibt, die anschließend von der Positioniereinheit 14 angefahren wird. Hierzu wird der Mikroskoptisch 13 und/oder das Mikroskopobjektiv 11 entsprechend verschoben. Wie bereits oben erwähnt umfasst der Begriff "Bewegung der Probe" jede Relativbewegung zwischen Probe und Objektiv 11. Wählt also ein Benutzer beispielweise eine neue x-y-Position und/oder einen neuen Fokuspunkt über die Benutzerschnittstelle 21, so kann die Steuereinheit 15 bereits die entsprechende Veränderung des mindestens einen Bilderzeugungsparameters triggern, so dass ohne Verzögerung bei Beginn der Bewegung die geänderten Bilderzeugungsparameter eingestellt sind. Gleichzeitig kann die Steuereinheit 15 die ursprünglichen Einstellungen im Speicher 22 abspeichern. Soll eine Änderung der Bilderzeugungsparameter erst bei Überschreiten eines vorgegebenen Schwellenwerts einer Bewegungsgröße vorgenommen werden, kann die Steuereinheit 15 bereits vorab prüfen, ob die bevorstehende Bewegung diesen Schwellenwert übersteigt oder nicht. Als Schwellenwert einer solchen Bewegungsgröße kann beispielsweise eine Mindestverfahrstrecke, eine Mindestgeschwindigkeit der Probenbewegung oder aber auch eine Mindestbeschleunigung der Probenbewegung vorgegeben werden.

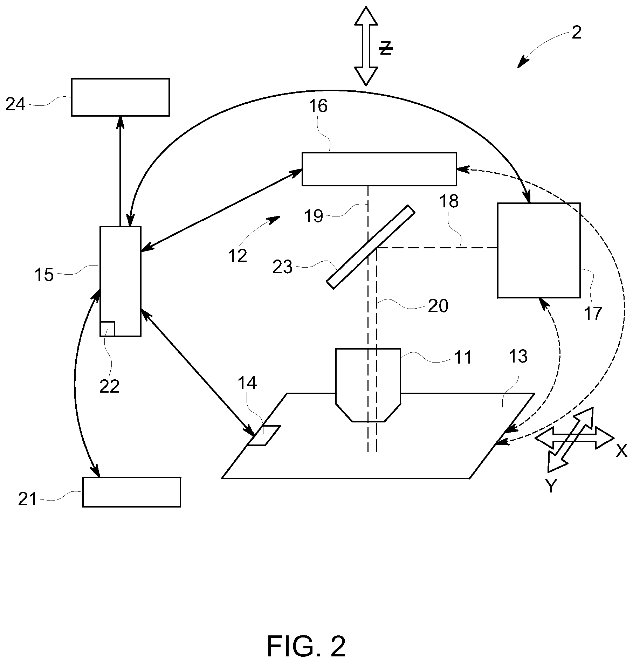

Figur 2 zeigt eine weitere Ausführungsform eines Weitfeld-Mikroskops 2, hier in Form eines Epifluoreszenzmikroskops. Wiederum sind nur die wesentlichen Merkmale eines solchen Mikroskops 2 dargestellt. Dieses umfasst wiederum einen Mikroskoptisch 13 und ein Mikroskopobjektiv 11. Im Objektraum zwischen Objektiv 11 und Mikroskoptisch 13 ist eine Probe angeordnet. Diese wird in Auflichtbeleuchtung beleuchtet. Zur Erzeugung eines Beleuchtungsstrahlengangs 18 dient eine Beleuchtungseinheit 17. Der erzeugte Beleuchtungsstrahlengang 18 wird über ein Umlenkelement 23 in die optische Achse 20 des Mikroskops 2 eingekoppelt und fällt über das Objektiv 11 auf die Probe. Die von der Probe emittierte Fluoreszenzstrahlung gelangt über das Objektiv 11 und das für diese Strahlung entsprechend durchlässige Umlenkelement 23 sowie eine hier nicht dargestellte Bilderzeugungsoptik zu dem lichtsensitiven Detektor 16, hier einer Kamera. Derartige Fluoreszenzmikroskope 2 sind an sich aus dem Stand der Technik bekannt und sollen daher vorliegend nicht weiter erläutert werden.

Die Steuereinheit des Mikroskops 2 ist wiederum mit 15 bezeichnet. Sie steht sowohl mit der Kamera 16 als auch mit der Positioniereinheit 14 des Mikroskoptisches 13 in Kommunikationsverbindung. Zusätzlich kann die Steuereinheit 15 auch mit der Beleuchtungseinheit 17 in Kommunikationsverbindung stehen. Schließlich kann wiederum eine Benutzerschnittstelle 21 vorgesehen sein, die mit der Steuereinheit 15 in Verbindung steht.

Bezüglich der Implementierung verschiedener Ausführungsformen des erfindungsgemäßen Verfahrens gilt bei einem Epifluoreszenzmikroskop 2 gemäß Figur 2 das völlig Analoge wie zu Figur 1 ausgeführt. Wiederum kann bei einer detektierten Probenbewegung die Belichtungszeit der Kamera 16 reduziert werden, um Bewegungsartefakte im Bild zu reduzieren. Gleichzeitig kann beispielsweise die Beleuchtungsintensität der Beleuchtungseinheit 17 erhöht werden, um die hiermit verbundenen Lichtverluste auszugleichen. Bezüglich der weiteren Ausgestaltungen, wie Detektion einer beabsichtigten oder bevorstehenden Bewegung, Überschreiten eines Schwellenwerts einer Bewegungsgröße, sei ausdrücklich auf die Ausführungen im Zusammenhang mit Figur 1 verwiesen, die vorliegend völlig analog gelten. Gleiches gilt für die alternativ denkbare direkte Verbindung der Positioniereinheit 14 mit der Kamera 16 und/oder der Beleuchtungseinheit 17 (gestrichelte Linien).

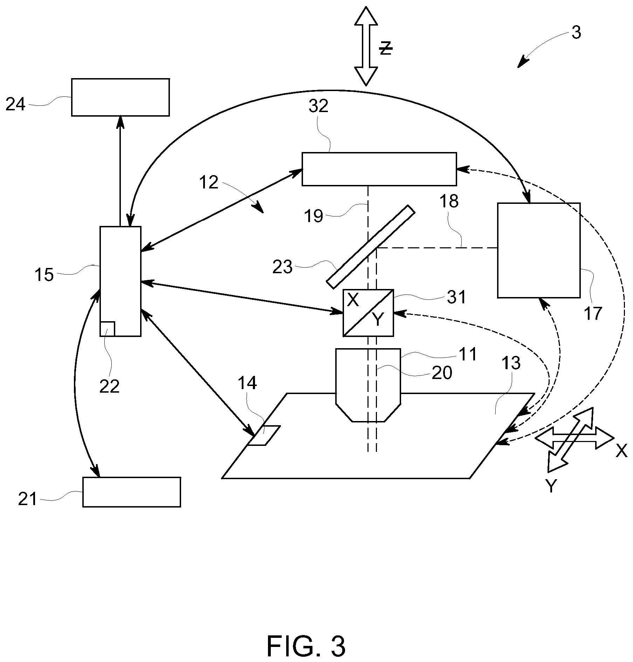

Figur 3 zeigt als weitere Ausführungsform eines Mikroskops 3 ein Konfokalmikroskop mit seinen wichtigsten Elementen. Das Mikroskop 3 umfasst wiederum einen Mikroskoptisch 13 und ein Mikroskopobjektiv 11. Eine Beleuchtungseinheit 17 erzeugt einen Beleuchtungsstrahlengang 18. Dieser wird über eine Umlenkelement 23 parallel zur optischen Achse 20 eingekoppelt und vom Mikroskopobjektiv 11 auf den abzubildenden Probenbereich fokussiert. Von diesem Punkt ausgehendes Licht gelangt umgekehrt wiederum durch das Mikroskopobjektiv 11 und die nachgeschaltete Bilderzeugungseinrichtung 12 auf den lichtsensitiven Detektor 32, beispielsweise eine Photomultiplierröhre (PMT) oder ein Photonenzähler (beispielsweise Hybrid-Detektor). Eine bekannte Scaneinheit 31 scannt den Beleuchtungsstrahlengang 18 in vorgegebener Weise über den abzubildenden Probenbereich. Hierdurch ist folglich die Bildfrequenz bzw. frame rate vorgegeben. Daher zählt im Rahmen vorliegender Anmeldung die Scaneinheit 31 zu der Bilderzeugungseinrichtung 12. Es sei im Übrigen angemerkt, dass auch andere Aufbauten eines Konfokalmikroskops denkbar sind, insbesondere solche, bei denen das Umlenkelement 23 und die Scaneinheit 31 eine bauliche Einheit bilden, ohne den Grundgedanken der vorliegenden Erfindung zu verlassen.

Wird im Falle des Konfokalmikroskops 3 gemäß Figur 3 eine Probenbewegung festgestellt, kann weiterhin ein hochqualitatives Bild dadurch erzeugt werden, dass die Steuereinheit 15 mit der Scaneinheit 31 und/oder mit dem lichtsensitiven Detektor 32 sowie mit der Positioniereinheit 14 und vorzugsweise auch mit der Beleuchtungseinheit 17 in Kommunikationsverbindung steht. Wiederum zeigt die Figur 3 gestrichelte Linien, die verdeutlichen, dass alternativ die Positioniereinheit 14 mit der Scaneinheit 31, der Beleuchtungseinheit 17 und/oder dem Detektor 32 unter Umgehung oder Aufgabe der Steuereinheit direkt miteinander verbunden sein können. Insbesondere lässt sich durch Erhöhung der Scannerfrequenz der Scaneinheit 31 die Bildfrequenz bzw. frame rate erhöhen, um bei einer Probenbewegung auftretende Bewegungsartefakte zu reduzieren. Des Weiteren kann zum Ausgleich von Lichtverlusten optional die Verstärkung des Detektors 32 erhöht und/oder die Beleuchtungsintensität der Beleuchtungseinheit 17 erhöht werden.

Bezüglich weiterer Ausführungsformen des Beispiels gemäß Figur 3 sei ausdrücklich auf die Ausführungen im Zusammenhang mit den Figuren 1 und 2 verwiesen, die hier in völlig analoger Weise gelten.

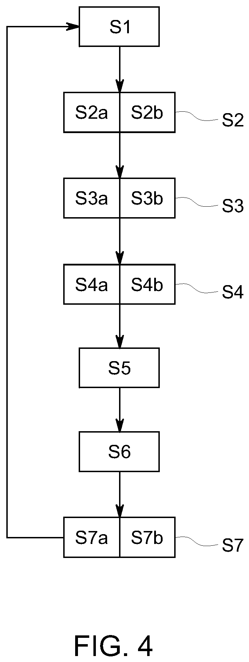

Figur 4 zeigt die Abfolge von Verfahrensschritten S1 bis S7 bei verschiedenen Ausführungsformen eines erfindungsgemäßen Verfahrens. Dieses umfasst folgende Schritte:
- **S1** bezeichnet den Schritt der kontinuierlichen Bildgebung bzw. der Erzeugung eines Live-Bildes mit einem erfindungsgemäßen Mikroskop, wie es beispielsweise anhand der Figuren 1 bis 3 beschrieben wurde.
- Der Schritt S2 bezeichnet zwei Unterfälle, nämlich den Fall S2a der kontinuierlichen Nachverfolgung (Tracking) der Relativposition der Probe, insbesondere also der x-y-z-Koordinaten der Probe, sowie den weiteren Fall S2b einer Benutzereingabe zur beabsichtigen Verschiebung der Probe an neue x-y-z-Koordinaten.
- Der Schritt S3 beschreibt zwei Unterfälle, nämlich beispielsweise eine Verschiebung in x-y-z-Richtung (S3a), insbesondere im oben beschriebenen Fall S2a der kontinuierlichen Nachverfolgung der Probenposition, mit kontinuierlicher Veränderung der Bilderzeugungsparameter beispielsweise über eine vorgegebene Funktion. Anstelle dessen kann die Bestimmung der Überschreitung eines Schwellwerts einer Bewegungsgröße dieser Probenbewegung bzw. -verschiebung treten (Schritt **S3b**), wonach eine schrittweise oder dann ebenfalls kontinuierliche Veränderung der Bilderzeugungsparameter erfolgt.
- Im Schritt S4 triggert die Steuereinheit des Mikroskops die Veränderung des mindestens einen Bilderzeugungsparameters gemäß erfindungsgemäßem Verfahren, wie es anhand der Ausführungsbeispiele gemäß Figuren 1 bis 3 beispielhaft beschrieben wurde (S4b). Um zu einem späteren Zeitpunkt die Ursprungseinstellungen wieder einstellen zu können, kann in einem vorgelagerten Schritt S4a eine Speicherung der Bilderzeugungsparameter vorgenommen werden, wie sie bei Detektion einer Bewegung der Probe vorgelegen haben.
- Im Schritt S5 wird während der Bewegung der Probe die Bilderzeugung mit den veränderten Parametern fortgesetzt.
- Im Schritt S6 wird das Ende der Probenbewegung
   detektiert/prognostiziert.
- Daraufhin kann im Schritt S7 die Steuereinheit entweder neue Bilderzeugungsparameter für die weitere Bildgebung bestimmen (Schritt S7a) oder die im Schritt S4a gespeicherten Bilderzeugungsparameter wiederherstellen (Schritt **S7b**).
- Anschließend wird die Bildgebung wieder fortgesetzt, was dem Schritt S1 zu Beginn des Verfahrens entspricht.

Nachdem eine tatsächliche oder eine bevorstehende Bewegung bzw. Verschiebung im Schritt S2 detektiert ist und eine der Vorgehensweisen gemäß S3a oder S3b gewählt ist, wobei die Schritte S2a und S3a in der Regel auch parallel erfolgen können, triggert die Steuereinheit des Mikroskops im Schritt S4b die Veränderung des mindestens einen Bilderzeugungsparameters gemäß erfindungsgemäßem Verfahren, wie es anhand der Ausführungsbeispiele gemäß Figuren 1 bis 3 beispielhaft beschrieben wurde. Um zu einem späteren Zeitpunkt die Ursprungseinstellungen wieder einstellen zu können, kann in einem vorgelagerten Schritt S4a eine Speicherung der Bilderzeugungsparameter vorgenommen werden, wie sie bei Detektion einer Bewegung der Probe vorgelegen haben. Anstelle einer Detektion einer Probenbewegung bzw. -verschiebung mit kontinuierlicher Veränderung der Bilderzeugungsparameter im Schritt S3a kann alternativ die Bestimmung der Überschreitung eines Schwellwerts einer Bewegungsgröße dieser Probenbewegung bzw. -verschiebung treten (Schritt S3b). In diesem Fall kann beispielsweise festgestellt werden, ob die Probenbewegung eine bestimmte Mindestgeschwindigkeit überschreitet oder nicht. Erst im Fall der Überschreitung einer bestimmten Mindestgeschwindigkeit werden die Bilderzeugungsparameter verändert.

Nach Veränderung des mindestens einen Bilderzeugungsparameters im Schritt S4 wird während der Bewegung der Probe die Bilderzeugung mit den veränderten Parametern fortgesetzt (Schritt S5). Die resultierende Bildgebung liefert bessere Bilder ohne Bewegungsartefakte im Vergleich zum Stand der Technik mit unveränderten Bilderzeugungsparametern. Im Schritt S6 wird das Ende der Probenbewegung detektiert/antizipiert. Daraufhin kann die Steuereinheit entweder neue Bilderzeugungsparameter für die weitere Bildgebung bestimmen (Schritt S7a) oder die im Schritt S4a gespeicherten Bilderzeugungsparameter wiederherstellen (Schritt S7b). Anschließend wird die Bildgebung mit diesen Bilderzeugungsparametern wieder fortgesetzt, was dem Schritt S1 zu Beginn des Verfahrens entspricht.

Im Falle einer Benutzereingabe zur Probenbewegung bzw. Probenverschiebung zu neuen Koordinaten im Schritt S2b erkennt das System eine beabsichtigte bevorstehende Bewegung der Probe. Daraufhin können beispielsweise die vor der Bewegung vorhandenen Bilderzeugungsparameter unmittelbar gespeichert werden (S4a) sowie die Veränderung des mindestens einen Bilderzeugungsparameters durch die Steuereinheit getriggert werden (S4b). Beide Schritte S4a und S4b können unmittelbar mit Beginn der Bewegung der Probe ausgelöst werden. Anschließend folgen die bereits oben beschriebenen Schritte S5, S6 und S7. Auch in diesem Fall kann eine Veränderung des mindestens einen Bilderzeugungsparameters erst dann vorgenommen werden, wenn ein vorbestimmter Schwellenwert einer Bewegungsgröße überschritten wird (S3b anstelle von S3a). Der weitere Verfahrensverlauf entspricht den oben bereits ausführlich erläuterten Ausführungsformen.

### Bezugszeichenliste

- 1, 2, 3: Mikroskop
- 11: Mikroskopobjektiv
- 12: Bilderzeugungseinrichtung
- 13: Mikroskoptisch
- 14: Positioniereinheit
- 15: Steuereinheit
- 16: Detektor, Kamera
- 17: Beleuchtungseinheit
- 18: Beleuchtungsstrahlengang
- 19: Beobachtungsstrahlengang
- 20: optische Achse
- 21: Benutzerschnittstelle
- 22: Speicher
- 23: Umlenkelement
- 24: Anzeigeeinheit

- 31: Scaneinheit
- 32: Detektor

- x, y, z: Raumrichtung
- S1,S2,S2a,S2b,S3,S3a,S3b,S4,S4a,S4b,S5,S6,S7a,S7b: Verfahrensschritte

## Patentansprüche

1. Verfahren zur Bilderzeugung mittels eines Mikroskops (3), wobei zur Bilderzeugung mit vorgegebenen Bilderzeugungsparametern eine abzubildende Probe sich im Objektraum des Mikroskops befindet,
**wobei** zunächst eine Bewegung oder eine beabsichtigte Bewegung der Probe detektiert und daraufhin abhängig von einer Bewegungsgröße automatisch mindestens ein Bilderzeugungsparameter während der Bewegung der Probe verändert wird,
**dadurch gekennzeichnet, dass** als Mikroskop ein Konfokalmikroskop (3) verwendet wird und als Bilderzeugungsparameter eine Scannerfrequenz einer Scaneinheit (31) des Konfokalmikroskops (3) erhöht oder eine Scanauflösung der Scaneinheit (31) reduziert wird.

2. Verfahren nach Anspruch 1, **dadurch gekennzeichnet, dass** der mindestens eine Bilderzeugungsparameter während der Bewegung der Probe automatisch verändert wird, wenn die Bewegungsgröße der Bewegung oder der beabsichtigten Bewegung einen vorgegebenen Schwellenwert übersteigt.

3. Verfahren Anspruch 1 oder 2, **dadurch gekennzeichnet, dass** eine beabsichtigte Bewegung der Probe detektiert wird, wenn eine Benutzereingabe zur Änderung der Position der Probe erfolgt.

4. Verfahren nach einem der Ansprüche 1 bis 3, **dadurch gekennzeichnet, dass** als Bilderzeugungsparameter die Bildfrequenz erhöht und/oder die Belichtungszeit erniedrigt wird.

5. Verfahren nach einem der Ansprüche 1 bis 4, **dadurch gekennzeichnet, dass** eine mit einer Veränderung des mindestens einen Bilderzeugungsparameters einhergehende Reduktion einer zur Bilderzeugung detektierten Lichtmenge oder zur Bilderzeugung verwendeten Signalstärke ausgeglichen wird.

6. Verfahren nach Anspruch 5, **dadurch gekennzeichnet, dass** der Ausgleich der Reduktion der gemessenen Lichtmenge durch eine Erhöhung der Verstärkung eines zur Bildgebung verwendeten Sensors (16, 32), eine Erhöhung der Beleuchtungsintensität einer zur Beleuchtung verwendeten Beleuchtungseinheit (17), eine Vergrößerung eines bei einem Konfokalmikroskop (3) verwendeten Pinholes, eine Reduktion der Auflösung und/oder eine Anpassung des Bildkontrasts im erzeugten Bild vorgenommen wird.

7. Verfahren nach einem der vorangehenden Ansprüche, **dadurch gekennzeichnet, dass** die Veränderung des mindestens einen Bilderzeugungsparameters dynamisch vorgenommen wird.

8. Verfahren nach einem der vorangehenden Ansprüche, **dadurch gekennzeichnet, dass** ein Ende der Bewegung der Probe detektiert und nach Ende der Bewegung die vor der Bewegung der Probe eingestellten Bilderzeugungsparameter wieder eingestellt oder neue Bilderzeugungsparameter eingestellt werden.

9. Mikroskop (3) umfassend
ein Mikroskopobjektiv (11) und eine dem Mikroskopobjektiv (11) in einem Beobachtungsstrahlengang (19) des Mikroskops nachgeschaltete Bilderzeugungseinrichtung (12) zur Bilderzeugung mit einstellbaren Bilderzeugungsparametern,
einen Mikroskoptisch (13) zur Aufnahme einer abzubildenden Probe,
eine Positioniereinheit (14) zur Positionierung der Probe im Objektraum des Mikroskops,
wobei die Positioniereinheit (14) mit der Bilderzeugungseinrichtung (12) derart in Kommunikationsverbindung steht, dass nach Erfassen einer Bewegung oder einer beabsichtigten Bewegung der Probe abhängig von einer Bewegungsgröße mindestens ein Bilderzeugungsparameter während der Bewegung der Probe verändert wird,
**dadurch gekennzeichnet, dass** das Mikroskop als Konfokalmikroskop (3) ausgebildet ist und eine Scaneinheit (31) zum Scannen eines Beleuchtungsstrahlengangs (18) über die abzubildende Probe umfasst, wobei die Scannerfrequenz oder die Scanauflösung der Scaneinheit (31) veränderbar ist, und dass als Bilderzeugungsparameter die Scannerfrequenz der Scaneinheit (31) erhöht oder die Scanauflösung der Scaneinheit (31) reduziert wird.

10. Mikroskop nach Anspruch 9, das eine Steuereinheit (15) umfasst, die mit der Positioniereinheit (14) und der Bilderzeugungseinrichtung (12) in Kommunikationsverbindung steht, wobei die Steuereinheit (15) derart eingerichtet ist, dass nach Erfassen einer Bewegung oder einer beabsichtigten Bewegung der Probe abhängig von einer Bewegungsgröße mindestens ein Bilderzeugungsparameter während der Bewegung der Probe verändert wird.

11. Mikroskop nach Anspruch 9 oder 10, wobei zum Erfassen einer Bewegung der Probe eine Auswerteeinheit vorhanden ist, die derart eingerichtet ist, dass Stellsignale für die Positioniereinheit (14) ausgewertet werden und/oder ein positionssensitives Messstrahlsignal eines von der Probe reflektierten Messstrahls ausgewertet wird und/oder ein von der Probe aufgenommenes Bild mittels Bildverarbeitung ausgewertet wird.

12. Mikroskop nach einem der Ansprüche 9 bis 11, wobei das Mikroskop eine Beleuchtungseinheit (17) zur Erzeugung eines auf die Probe gerichteten Beleuchtungsstrahlengangs (18) umfasst, wobei die Beleuchtungsintensität einstellbar ist.

13. Mikroskop nach einem der Ansprüche 9 bis 12, wobei das Mikroskop eine Speichereinheit (22) zur Speicherung von eingestellten Bilderzeugungsparametern umfasst.

14. Mikroskop nach einem der Ansprüche 9 bis 13, wobei die Steuereinheit (15) des Mikroskops derart eingerichtet ist, dass eine beabsichtigte Bewegung der Probe detektiert wird, wenn über eine Benutzerschnittstelle (21) eine Benutzereingabe zur Änderung der Position der Probe erfolgt.

15. Mikroskop nach einem der Ansprüche 9 bis 14, wobei die Steuereinheit (15) des Mikroskops derart eingerichtet ist, dass der mindestens eine Bilderzeugungsparameter während der Bewegung der Probe verändert wird, wenn die Bewegungsgröße der Bewegung oder der beabsichtigten Bewegung der Probe einen vorgegebenen Schwellenwert übersteigt.

16. Computerprogramm mit Programmcode zur Durchführung aller Verfahrensschritte eines Verfahrens nach einem der Ansprüche 1 bis 8, wenn das Computerprogramm auf einer Recheneinheit, oder einer Steuereinheit (15) eines Mikroskops (3) gemäß einem der Ansprüche 9 bis 15, ausgeführt wird.

17. Computerprogrammprodukt mit einem Computerprogramm mit Programmcode zur Durchführung aller Verfahrensschritte eines Verfahrens nach einem der Ansprüche 1 bis 8, wenn das Computerprogramm auf einer Recheneinheit oder einer Steuereinheit (15) eines Mikroskops (3) gemäß einem der Ansprüche 9 bis 15, ausgeführt wird.

## Claims

1. Method for image generation by means of a microscope (3), wherein, for image generation with predefined image generation parameters, a sample to be imaged is located in the object space of the microscope,
**wherein** first a movement or an intended movement of the sample is detected and thereupon, depending on a movement variable, at least one image generation parameter is automatically changed during the movement of the sample,
**characterized in that** a confocal microscope (3) is used as microscope and, as image generation parameter, a scanner frequency of a scanning unit (31) of the confocal microscope (3) is increased or a scan resolution of the scanning unit (31) is reduced.

2. Method according to claim 1, **characterized in that** at least one image generation parameter is automatically changed during the movement of the sample when the movement variable of the movement or of the intended movement exceeds a predefined threshold value.

3. Method according to claim 1 or 2, **characterized in that** an intended movement of the sample is detected when a user input for changing the position of the sample is made.

4. Method according to one of claims 1 to 3, **characterized in that**, as image generation parameter, the image frequency is increased and/or the exposure time is reduced.

5. Method according to one of claims 1 to 4, **characterized in that** a reduction, accompanying a change of said at least one image generation parameter, of an amount of light detected for image generation or of signal strength used for image generation is compensated for.

6. Method according to claim 5, **characterized in that** the compensation of the reduction of the measured amount of light is carried out by an increase of the gain of a sensor (16, 32) used for image generation, an increase of the illumination intensity of an illumination unit (17) used for illumination, an enlargement of a pinhole used in a confocal microscope (3), a reduction of the resolution and/or an adaptation of the image contrast in the generated image.

7. Method according to any one of the preceding claims, **characterized in that** the change of said at least one image generation parameter is carried out dynamically.

8. Method according to any one of the preceding claims, **characterized in that** an end of the movement of the sample is detected and, after the end of the movement, the image generation parameters set before the movement of the sample are set again or new image generation parameters are set.

9. Microscope (3) comprising
a microscope objective (11) and an image generation device (12), downstream of the microscope objective (11) in an observation beam path (19) of the microscope, for image generation with adjustable image generation parameters,
a microscope stage (13) for receiving a sample to be imaged, a positioning unit (14) for positioning the sample in the object space of the microscope,
wherein the positioning unit (14) is in communication connection with the image generation device (12) such that, after detection of a movement or of an intended movement of the sample, depending on a movement variable, at least one image generation parameter is changed during the movement of the sample,
**characterized in that** the microscope is configured as a confocal microscope (3) and comprises a scanning unit (31) for scanning an illumination beam path (18) over the sample to be imaged, wherein the scanner frequency or the scan resolution of the scanning unit (31) can be changed, and **in that**, as image generation parameter, the scanner frequency of the scanning unit (31) is increased or the scan resolution of the scanning unit (31) is reduced.

10. Microscope according to claim 9, comprising a control unit (15), which is in communication connection with the positioning unit (14) and the image generation device (12), wherein the control unit (15) is configured such that, after detection of a movement or of an intended movement of the sample, depending on a movement variable, at least one image generation parameter is changed during the movement of the sample.

11. Microscope according to claim 9 or 10, wherein, for detecting a movement of the sample, an evaluation unit is present, which is configured such that control signals for the positioning unit (14) are evaluated and/or a position-sensitive measurement beam signal of a measurement beam reflected by the sample is evaluated and/or an image of the sample is evaluated by means of image processing.

12. Microscope according to one of claims 9 to 11, wherein the microscope comprises an illumination unit (17) for generating an illumination beam path (18) directed onto the sample, wherein the illumination intensity is adjustable.

13. Microscope according to one of claims 9 to 12, wherein the microscope comprises a storage unit (22) for storing set image generation parameters.

14. Microscope according to one of claims 9 to 13, wherein the control unit (15) of the microscope is configured such that an intended movement of the sample is detected when a user input for changing the position of the sample is made via a user interface (21).

15. Microscope according to one of claims 9 to 14, wherein the control unit (15) of the microscope is configured such that said at least one image generation parameter is changed during the movement of the sample when the movement variable of the movement or of the intended movement of the sample exceeds a predefined threshold value.

16. Computer program with program code for carrying out all method steps of a method according to one of claims 1 to 8 when the computer program is executed on a computing unit or a control unit (15) of a microscope (3) according to one of claims 9 to 15.

17. Computer program product with a computer program with program code for carrying out all method steps of a method according to one of claims 1 to 8 when the computer program is executed on a computing unit or a control unit (15) of a microscope (3) according to one of claims 9 to 15.

## Revendications

1. Procédé d'obtention d'images au moyen d'un microscope (3), dans lequel, pour l'obtention d'images avec des paramètres d'obtention d'images prédéfinis, un échantillon à représenter se trouve dans l'espace objet du microscope,
**dans lequel,** tout d'abord, un mouvement ou un mouvement prévu de l'échantillon est détecté et, ensuite, en fonction d'une grandeur de mouvement, au moins un paramètre d'obtention d'images est automatiquement modifié pendant le mouvement de l'échantillon,
**caractérisé en ce que**, comme microscope, un microscope confocal (3) est utilisé et, comme paramètre d'obtention d'images, une fréquence de balayage d'une unité de balayage (31) du microscope confocal (3) est augmentée ou une résolution de balayage de l'unité de balayage (31) est réduite.

2. Procédé selon la revendication 1, **caractérisé en ce que**, ledit au moins un paramètre d'obtention d'images est modifié automatiquement pendant le mouvement de l'échantillon lorsque la grandeur de mouvement du mouvement ou du mouvement envisagé dépasse une valeur seuil prédéfinie.

3. Procédé selon la revendication 1 ou la revendication 2, **caractérisé en ce que**, lorsqu'une entrée utilisateur pour la modification de la position de l'échantillon intervient, un mouvement prévu de l'échantillon est détecté.

4. Procédé selon l'une des revendications 1 à 3, **caractérisé en ce que**, comme paramètres d'obtention d'images, la fréquence d'image est augmentée et/ou le temps d'exposition est diminué.

5. Procédé selon l'une des revendications 1 à 4, **caractérisé en ce que** la réduction de la quantité de lumière détectée pour l'obtention d'images ou de l'intensité de signal utilisée pour l'obtention d'images, ladite réduction accompagnant une modification dudit au moins un paramètre d'obtention d'images, est compensée.

6. Procédé selon la revendication 5, **caractérisé en ce que** la compensation de la réduction de la quantité de lumière mesurée est effectuée par une augmentation du gain d'un capteur (16, 32) utilisé pour l'obtention d'images, une augmentation de l'intensité d'éclairage d'une unité d'éclairage (17) utilisée pour l'éclairage, un agrandissement d'un diaphragme utilisé dans un microscope confocal (3), une réduction de la résolution et/ou une adaptation du contraste d'image dans l'image obtenue.

7. Procédé selon l'une quelconque des revendications précédentes, **caractérisé en ce que**, la modification dudit au moins un paramètre d'obtention d'images est effectuée dynamiquement.

8. Procédé selon l'une quelconque des revendications précédentes, **caractérisé en ce que** la fin du mouvement de l'échantillon est détectée et qu'après la fin du mouvement, les paramètres d'obtention d'images sont à nouveau réglés selon les paramètres d'obtention d'images réglés avant le mouvement de l'échantillon, ou de nouveaux paramètres d'obtention d'images sont réglés.

9. Microscope (3) comprenant
un objectif de microscope (11) et un dispositif d'obtention d'images (12), disposé en aval de l'objectif de microscope (11) dans un trajet de rayons d'observation (19) du microscope, pour l'obtention d'images selon des paramètres d'obtention d'images réglables,
une platine de microscope (13) pour recevoir un échantillon à représenter, une unité de positionnement (14) pour positionner l'échantillon dans l'espace objet du microscope,
dans lequel l'unité de positionnement (14) est en liaison de communication avec le dispositif d'obtention d'images (12) de telle sorte que, après détection d'un mouvement ou d'un mouvement prévu de l'échantillon, selon une grandeur de mouvement, au moins un paramètre d'obtention d'images est modifié pendant le mouvement de l'échantillon,
**caractérisé en ce que** le microscope est réalisé sous la forme d'un microscope confocal (3) et comprend une unité de balayage (31) pour balayer un trajet de rayons d'éclairage (18) sur l'échantillon à représenter, dans lequel la fréquence de balayage ou la résolution de balayage de l'unité de balayage (31) peut être modifiée, et **en ce que**, comme paramètre d'obtention d'images, la fréquence de balayage de l'unité de balayage (31) est augmentée ou la résolution de balayage de l'unité de balayage (31) est réduite.

10. Microscope selon la revendication 9, ledit microscope comprenant une unité de commande (15), laquelle est en liaison de communication avec l'unité de positionnement (14) et le dispositif d'obtention d'images (12), ladite unité de commande (15) étant configurée de telle sorte que, après détection d'un mouvement ou d'un mouvement prévu de l'échantillon, selon une grandeur de mouvement, au moins un paramètre d'obtention d'images est modifié pendant le mouvement de l'échantillon.

11. Microscope selon la revendication 9 ou la revendication 10, dans lequel, pour détecter un mouvement de l'échantillon, une unité d'évaluation est présente, laquelle est configurée de telle sorte que des signaux de commande pour l'unité de positionnement (14) sont évalués et/ou un signal de faisceau de mesure sensible à la position d'un faisceau de mesure réfléchi par l'échantillon est évalué et/ou une image prise de l'échantillon est évaluée au moyen d'un traitement d'image.

12. Microscope selon l'une des revendications 9 à 11, dans lequel le microscope comprend une unité d'éclairage (17) pour générer un trajet de rayons d'éclairage (18) dirigé vers l'échantillon, dans lequel l'intensité d'éclairage est réglable.

13. Microscope selon l'une des revendications 9 à 12, dans lequel le microscope comprend une unité de mémoire (22) pour stocker des paramètres d'obtention d'images réglés.

14. Microscope selon l'une des revendications 9 à 13, dans lequel l'unité de commande (15) du microscope est configurée de telle sorte qu'un mouvement prévu de l'échantillon est détecté lorsqu'une entrée utilisateur destinée à modifier la position de l'échantillon a lieu via une interface utilisateur (21).

15. Microscope selon l'une des revendications 9 à 14, dans lequel l'unité de commande (15) du microscope est configurée de telle sorte que, l'un au moins des paramètres d'obtention d'images est modifié pendant le mouvement de l'échantillon lorsque la grandeur de mouvement du mouvement ou du mouvement envisagé de l'échantillon dépasse une valeur seuil prédéfinie.

16. Programme d'ordinateur avec du code de programme pour l'exécution de toutes les étapes de procédé d'un procédé selon l'une des revendications 1 à 8, lorsque le programme d'ordinateur est exécuté sur une unité de calcul, ou une unité de commande (15) d'un microscope (3) selon l'une des revendications 9 à 15.

17. Produit programme d'ordinateur comportant un programme d'ordinateur avec du code de programme pour l'exécution de toutes les étapes de procédé d'un procédé selon l'une des revendications 1 à 8, lorsque le programme d'ordinateur est exécuté sur une unité de calcul ou une unité de commande (15) d'un microscope (3) selon l'une des revendications 9 à 15.
